# EUROPEAN PATENT APPLICATION

(11) **EP 1 503 543 A1**
(43) Date of publication of application: **02.02.2005**
(21) Application number: 04003015.7
(22) Date of filing: 11.02.2004
(51) Int. Cl.: H04L 12/26

(54) **Detection of failures in a ring-based electrical network**

(30) Priority: 30.07.2003 JP 2003283004
(71) Applicant: MATSUSHITA ELECTRIC INDUSTRIAL CO., LTD., Kadoma-shi, Osaka 571-8501 (JP)
(72) Inventor: Mizuguchi, Yuji, Hirakata-shi Osaka-fu 573-0165 (JP); Umei, Toshitomo, Settsu-shi Osaka-fu 566-0033 (JP); Akita, Takashi, Osaka-shi Osaka-fu 532-0022 (JP); Katta, Noboru, Itami-shi Hyogo-ken 664-0017 (JP); Kaneita, Akihiro, Yokohama-shi Kanagawa-ken 241-0002 (JP); Ohsone, Masahiro, Yokohama-shi Kanagawa-ken 240-0051 (JP)
(74) Representative: Balsters, Robert

(57) **Abstract**

A data transmission apparatus (10) for transmitting a data signal in accordance with a predetermined protocol in one direction within a ring network of a plurality of data transmission apparatuses includes: signal determination means (11) for determining a presence or absence of a data signal from an immediately upstream data transmission apparatus (10) in the ring network based on an amplitude of the data signal; and stopping means for stopping transmission of the data signal to an immediately downstream data transmission apparatus (10) if the signal determination means (11) determines that there is no incoming data signal. The data signal is a signal obtained by modulating an amplitude component of an electrical signal of a predetermined frequency. Thus, a data transmission apparatus is provided which can quickly detect a momentary power interruption in a data transmission system composed of data transmission apparatuses interconnected in a ring fashion.

## Description

### BACKGROUND OF THE INVENTION

### Field of the Invention

The present invention relates to a data transmission apparatus, and more particularly to a technique where a plurality of data transmission apparatuses are used to construct a ring network, in which an electrical signal is transmitted in one direction in accordance with a predetermined protocol.

### Description of the Background Art

Transmission of Internet information or image information within an automobile or the like, as applied in car navigation or ITS (Intelligent Transport Systems) technology in recent years, requires large data transfers and fast communications. Communication methods for transmitting such digitized image and/or voice data, or digital data (e.g., computer data), are being studied vigorously. There already exists practical implementations of networks for use in digital data transmission within an automobile or the like. Such an on-vehicle network adopts a ring topology as its physical topology. Specifically, a plurality of nodes are connected in a ring topology forming a unidirectional ring-type LAN for which interconnects audio devices, navigation devices, information terminal devices, and the like in a unified manner. One example of an information communication protocol used in a ring-type LAN is MOST (Media Oriented Systems Transport). MOST not only defines a communication protocol but also refers to manners of constructing distributed systems. The data on a MOST network is transmitted on a frame-by-frame basis, such that frames are transmitted sequentially from node to node in one direction.

In the case of a ring-type LAN provided inside an automobile, for example, the radiation noise from the LAN may cause malfunctioning of other electronic devices mounted in the automobile. On the other hand, radiation noise from such other devices should not hinder proper transmission. Therefore, in a conventional ring-type LAN which employs MOST, the nodes are typically interconnected via fiber-optic cables so as to improve noise immunity while preventing electromagnetic waves from being generated. However, inexpensive cables, such as twisted pair cables or coaxial cables, may also be used to perform electrical communications; there have been implementations of this technique which realize a fast data transmission rate exceeding 20 Mbps while reducing radiation noise and improving noise immunity.

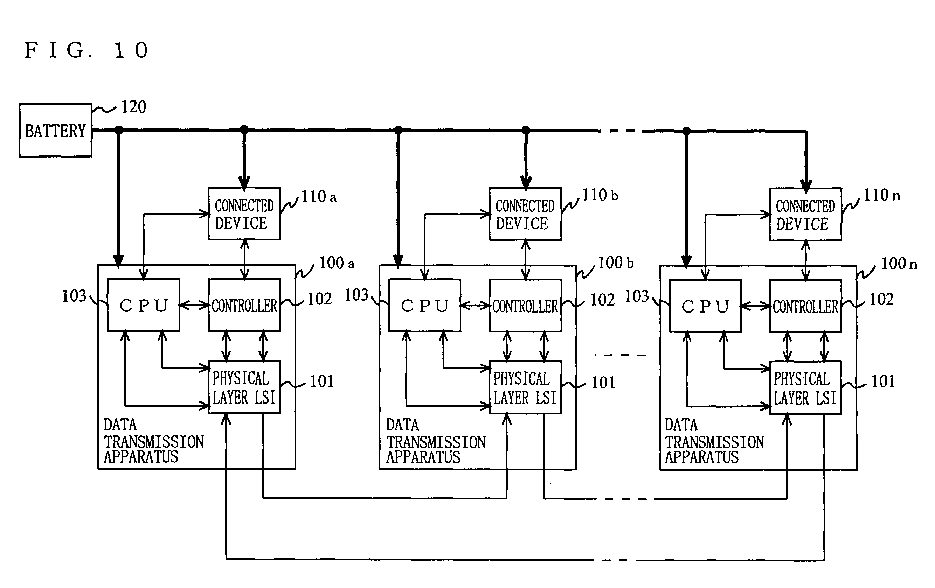

A data transmission system in which nodes are interconnected via inexpensive cables will be described with reference to the figures. FIG. 10 is a block diagram illustrating the structure of such a data transmission system.

The data transmission system shown in FIG. 10 comprises: data transmission apparatuses 100a, 100b, ... etc.; connected devices 110a, 110b, ... etc. ; and a battery 120. One of the data transmission apparatuses 100a, 100b, ... etc., is a master data transmission apparatus (e.g., 100a), and the other data transmission apparatuses are slave data transmission apparatuses (e.g., 100b, etc.). All of the data transmission apparatuses 100a, 100b, ... etc., are interconnected in a ring fashion via electrical transmission lines. Data is transmitted in the direction of the arrows between the data transmission apparatuses 100a, 100b, ... etc., in accordance with the MOST communication protocol. Each of the connected devices 110a, 110b, ... etc., is an electronic device used within an automobile, such as a car navigation device. Note that, in terms of hardware construction, it is commonplace to integrate the data transmission apparatuses 100a, 100b, ... etc., and the connected devices 110a, 110b, ... etc., into one unit. The battery 120 supplies power to the data transmission apparatuses 100a, 100b, ... etc., and the connected devices 110a, 110b, ... etc.

Each of the data transmission apparatuses 100a, 100b, ... etc., includes a physical layer LSI 101, a controller 102, and a CPU 103. Based on a protocol defined under MOST, the controller 102 converts the data from each connected device 110 into digital data, and outputs the digital data to the physical layer LSI 101. Conversely, the controller 102 converts the digital data output from the physical layer LSI 101 to a format which complies with the device 110 connected thereto, and outputs the converted data to the connected device 110. The CPU 103 controls the operations of the controller 102, the physical layer LSI 101, and the connected device 110.

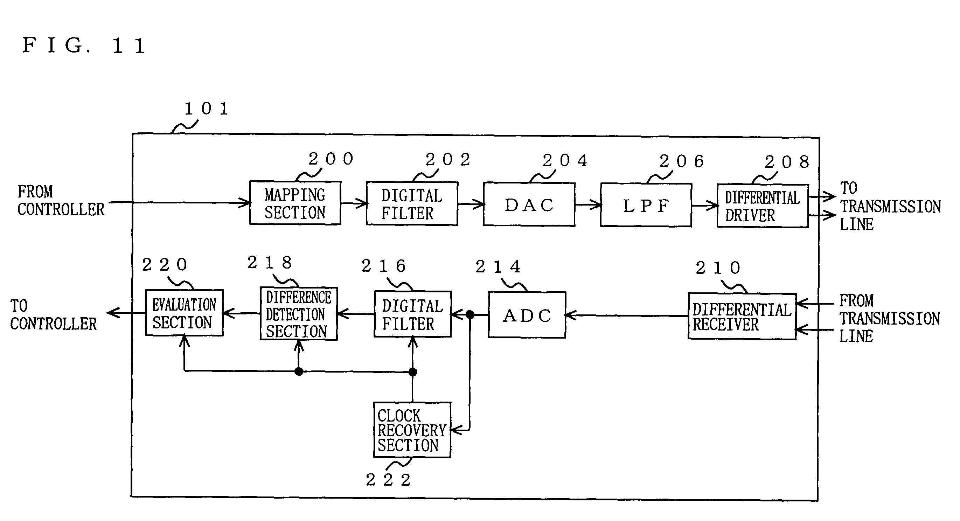

The physical layer LSI 101 converts the digital data output from the controller 102 to an electrical signal, and outputs the electrical signal to an immediately downstream data transmission apparatus 100. Furthermore, the physical layer LSI 101 converts the electrical signal output from an immediately upstream data transmission apparatus 100 to digital data, and outputs the digital data to the controller 102. FIG. 11 is a block diagram illustrating the structure of the physical layer LSI 101. As shown in FIG. 11, the physical layer LSI 101 includes a mapping section 200, a digital filter 202, a DAC (digital to analog converter) 204, an LPF (low pass filter) 206, a differential driver 208, a differential receiver 210, an ADC (analog to digital converter) 214, a digital filter 216, a difference detection section 218, a evaluation section 220, and a clock recovery section 222.

The mapping section 200 converts data output from the controller 102 to 2-bit parallel data, and maps the parallel data to one of eight symbol values, in accordance with a clock. Now, the mapping performed by the mapping section 200 will be specifically described with reference to FIGS. 12 to 14. FIG. 12 is a table illustrating a relationship between parallel data, a symbol value B(k) to which the parallel data is to be mapped, and a symbol value B(k-1) which comes immediately previous to the symbol valueB(k). FIGS. 13 and 14 are diagrams illustrating the waveform of an analog signal into which the digital data obtained through the mapping by the mapping section 200 is converted by the DAC 204.

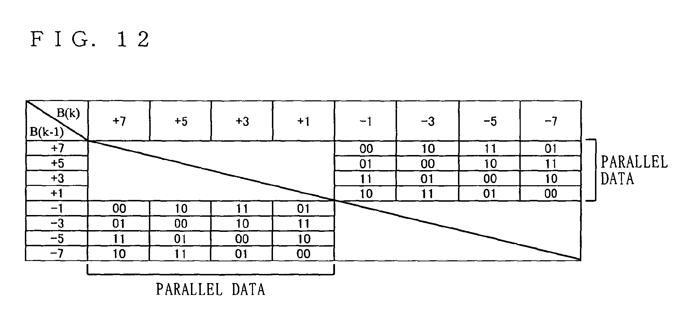

Two-bit parallel data such as "00" or "01" is input to the mapping section 200. In accordance with the table shown in FIG. 12, the mapping section 200 maps the input data to one of the eight values: +7, +5, +3, +1, -1, -3, -5, or -7. A specific example of the mapping method will be described below.

For example, if the previous symbol value B(k-1) is -1, and the mapping section 200 receives the parallel data "00", then the current symbol value B(k) will be +7 according to FIG. 12. On the other hand, if the previous symbol value B(k-1) is +5, and the mapping section 200 receives the parallel data "01", then the current symbol value B(k) will be -1. Thus, according to this mapping method, a current symbol value B(k) is determined based on the previous symbol value B(k-1) and the received parallel data. In this manner, the symbol value B(k) is mapped alternately to either a positive value or a negative value. The symbol value B(k) thus determined is input to the DAC 204 via the digital filter 202.

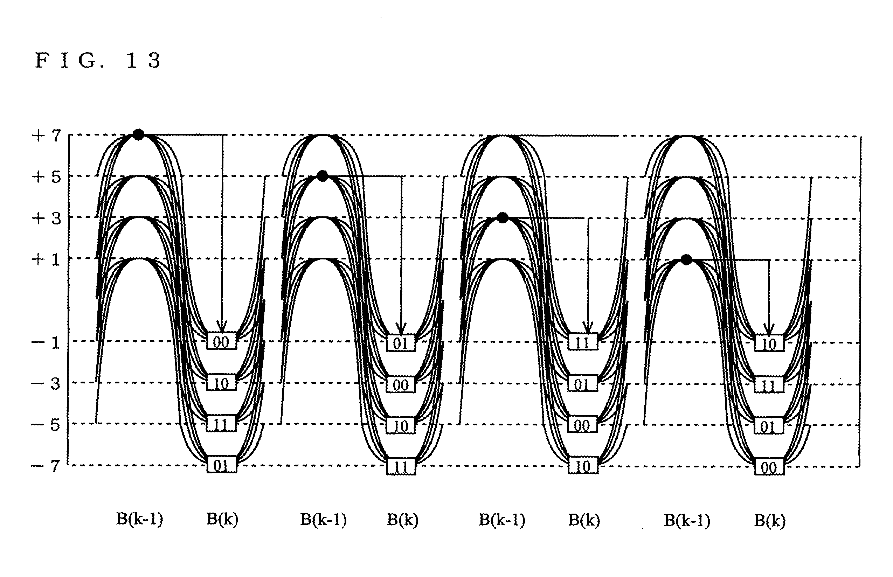

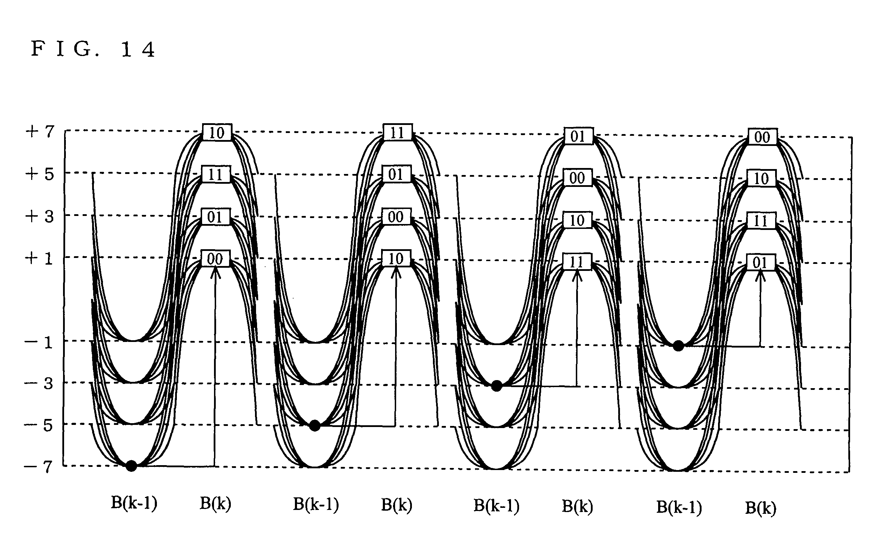

Based on the incoming symbol value B(k), the DAC 204 generates an analog signal as shown in FIGS. 13 and 14. FIGS. 13 and 14 will now be described in detail.

FIG. 13 is a diagram illustrating the symbol value B(k) when the parallel data "00", "01", "11" or "10" is input in the case where the previous symbol value B(k-1) is +7, +5, +3 or +1. FIG. 13 shows that the current symbol value B(k) of the generated analog signal is -1 if the serial data "00" is input in the case where the previous symbol value B(k-1) is +7, for example.

FIG. 14 is a diagram illustrating the symbol value B(k) when the parallel data "00", "01", "11" or "10" is input in the case where the previous symbol value B(k-1) is -7, -5, -3 or -1. FIG. 14 shows that the current symbol value B(k) of the generated analog signal is +1 if the serial data "00" is input in the case where the previous symbol value B(k-1) is -7, for example.

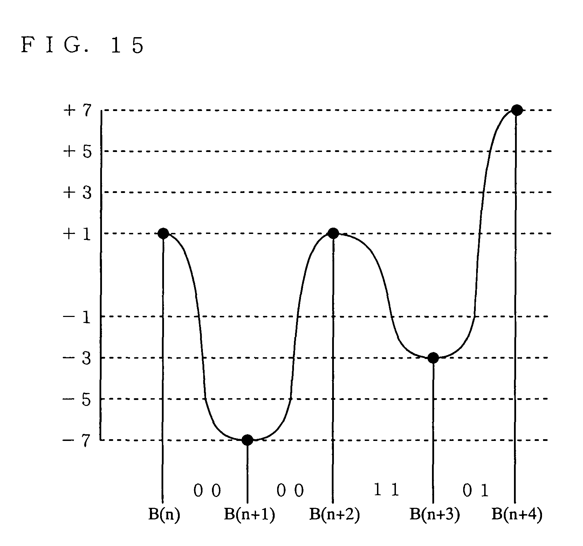

Now, an exemplary analog signal which is generated according to the above principles will be described. FIG. 15 is a diagram illustrating an analog signal which is output from the differential driver 208 when the parallel data "00", "00", "11" and "01" are sequentially input in the case where the first symbol value B(n) is +1.

Since the first symbol value B(n) is +1, the data is mapped to +1. When the parallel data "00" is next input, the data is mapped to -7, based on the rightmost wave shown in FIG. 13. Then, when the parallel data "00" is input, the data is mapped to +1 based on the leftmost wave shown in FIG. 14. Then, when the parallel data "11" is input, the data is mapped to -3 based on the rightmost wave shown in FIG. 13. Then, when the parallel data "01" is input, the data is mapped to +7 based on the second rightmost wave shown in FIG. 14. The analog signal as shown in FIG. 15 is generated through such processes.

The digital filter 202 is a wave-shaping filter for applying a band restriction and minimizing the inter-symbol interference in the electrical signal to be transmitted. As the digital filter 202, for example, an FIR filter (45 taps ; 10 bits) which allocates the roll-off rate of 100% into routes with a sampling frequency which is six times the symbol rate may be used.

The DAC 204 converts the signal which has been subjected to the band restriction by the digital filter 202 into an analog signal. In the output signal from the DAC 204, the LPF 206 attenuates frequency components higher than its signal band. The differential driver 208 amplifies the level of the analog signal output from the LPF 206, converts it to a differential signal, and outputs it onto the transmission line consisting of a pair of wires. Specifically, the differential driver 208 sends out the electrical signal to be transmitted onto one (plus side) of the wires of the transmission line, and sends out a signal having an opposite polarity to this electrical signal onto the other wire (minus side) of the transmission line. As a result, a pair of plus and minus electrical signals are transmitted on the transmission line, whereby the radiation noise from the transmission line can be reduced.

The differential signal which has thus been sent out on the transmission line is received by the differential receiver 210 in the immediately downstream data transmission apparatus, which converts the differential signal to a voltage signal for output to its ADC 214. Since a pair of plus and minus electrical signals are transmitted by the pair of wires of the transmission line as described above, the differential receiver 210 can eliminate electrical influences from external sources by judging the signal based on a difference between the plus side and the minus side. The ADC 214 converts the output signal from the differential receiver 210 to a digital signal, in accordance with a clock.

The clock recovery section 222 performs a clock recovery by recovering the 12.5 MHz clock component which is constantly contained in the output signal from the ADC 214. The clock which has been recovered by the clock recovery section 222 is used as a clock for the digital filter 216, the difference detection section 218, and the evaluation section 220.

As the digital filter 216 which removes noise from the digital signal output from the ADC 214, an FIR filter for wave-shaping purposes, e.g., an FIR filter having a sampling frequency which is 20 times the symbol rate may be used. In conjunction with the transmitting-end digital filter 202 described above, digital filter 216 realizes roll-off characteristics free of inter-symbol interferences.

From the digital data value which is output from the digital filter 216, the difference detection section 218 subtracts the digital data value which existed one symbol before, and outputs the calculated difference to the evaluation section 220. For example, in the case where a signal having a waveform as shown in FIG. 15 is input to the physical layer LSI 101, digital data values +1, -7, +1, -3 and +7 are sequentially output from the digital filter 216 . Therefore, the difference detection section 218 first subtracts +1 from -7 and outputs -8 to the evaluation section 220. Next, the difference detection section 218 subtracts -7 from +1 to output +8; subtracts +1 from -3 to output -4; and subtracts -3 from +7 to output +10.

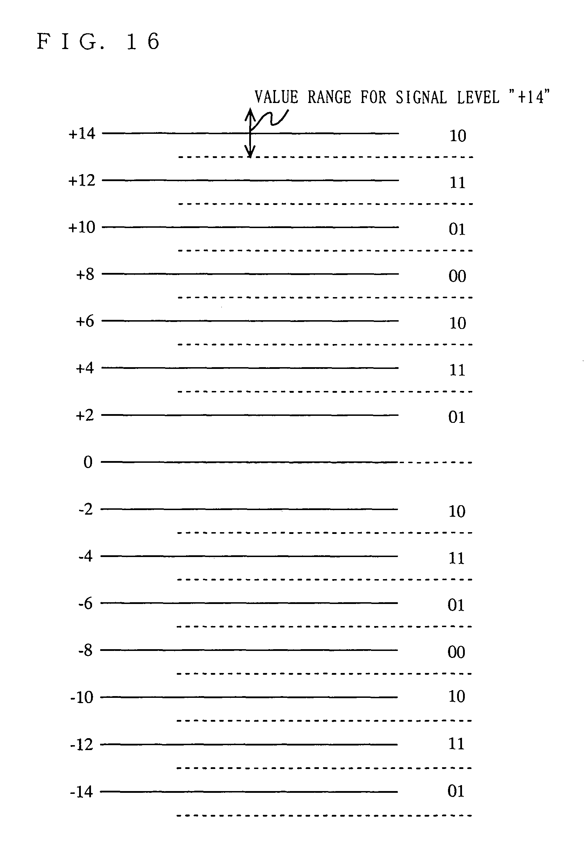

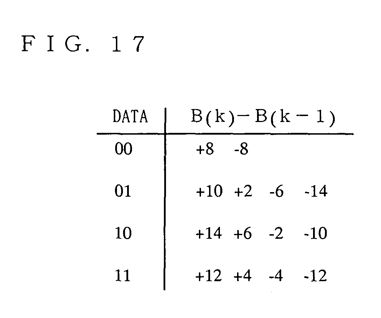

The evaluation section 220 determines the magnitude of the difference value which is output from the difference detection section 218, and converts the determined data value to 2-bit parallel data. Hereinafter, with reference to FIGS. 16 and 17, the determination process by the evaluation section 220 will be described in detail. FIG. 16 is a diagram illustrating the evaluation levels used by the evaluation section 220 to determine the magnitude of a given difference value. For example, FIG. 16 shows that a difference value whose level falls within a range indicated by the arrow will be determined as having a signal level of +14. FIG. 17 is a table used for converting the signal level determined by the evaluation section 220 to parallel data. For example, FIG. 17 shows that a difference value whose signal level is determined to be +8 or -8 will be converted to the parallel data "00". The table shown in FIG. 17 is generated based on the table shown in FIG. 12.

Evaluation levels as shown in FIG. 16, to be used in the evaluation of signal levels, are set in the evaluation section 220. Thus, the evaluation section 220 determines the signal level of each difference value obtained through subtraction in accordance with the evaluation levels shown in FIG. 16. Then, the evaluation section 220 converts the determined signal level to parallel data based on the table shown in FIG. 17, and converts it to serial data for output. Hereinafter, the operation of the evaluation section 220 in an exemplary case will be described.

For example, if a signal having a waveform as shown in FIG. 15 is input to the physical layer LSI 101, difference values -8, +8, -4 and +10 are sequentially output from the difference detection section 218, as described above. The evaluation section 220 determines the signal level of each output difference value on the basis of the evaluation levels shown in FIG. 16. Specifically, the evaluation section 220 determines the signal levels of the difference values tobe -8, +8, -4 and +10, respectively. Next, based on the table shown in FIG. 17, the evaluation section 220 converts the signal levels of the difference values to the parallel data "00", "00", "11" and "01", respectively, and converts them to serial data, which are output to the controller 102.

Now, an initialization operation to be performed in a conventional data transmission system having the above-described construction will be briefly described. The initialization operation is performed before commencing data communications.

The initialization operation includes a synchronization process and an evaluation level training process. The synchronization process is a process in which the slave data transmission apparatuses 100b, etc., establish clock synchronization based on a lock signal which is output from the master data transmission apparatus 100a. The evaluation level training process is a process of adjusting the evaluation levels to be used by the respective evaluation sections 220 of the data transmission apparatuses 100a, 100b, ... etc. Specifically, in the evaluation level training process, the master data transmission apparatus 100a transmits a predefined training signal for setting the evaluation levels, and based on this training signal, each of the slave data transmission apparatuses 100b, etc., sets in its evaluation section 220 a set of evaluation levels which is common to all of the master and slave data transmission apparatuses 100a, 100b, ... etc. After these processes are performed, the data transmission apparatuses 100a, 100b, ... etc. become ready to perform data communications within the data transmission system.

In the above-described data transmission system, as shown in FIG. 10, the single common battery 120 supplies power to the data transmission apparatuses 100a, 100b, ... etc. However, the voltage of the battery 120 may have a momentary dip, for example, when a device connected to any of the data transmission apparatuses 100a, 100b, ... etc. starts operating. When such a drastic drop in the voltage of the battery 120 occurs, the operation of some of the data transmission apparatuses 100 in the data transmission system may be reset (hereinafter, such a drop in the supply voltage and a consequent resetting will be referred to as a "momentary power interruption").

As described above, the data transmission apparatuses 100a, 100b, ... etc., in the data transmission system perform their operations in synchronization with one another, with trainings being performed in preparation of signal level evaluations. Therefore, if one or more of the data transmission apparatuses 100 is reset for the aforementioned reason, the data transmission apparatus(es) 100 which has been reset will go out of synchronization with the other data transmission apparatuses 100, resulting in a resetting of the evaluation levels in the reset data transmission apparatus(es) 100. This makes it impossible to perform communications between the data transmission apparatuses, including the other data transmission apparatuses 100 which have not even been reset.

In order to solve the above problem, it is necessary to reset all of the data transmission apparatuses 100a, 100b, ... etc., within the data transmission system and again perform a reboot operation (i.e., the synchronization process and the evaluation level training process). In order to be able to perform such a reboot automatically, the data transmission apparatuses 100a, 100b, ... etc., in the data transmission system need to be able to detect the occurrence of a momentary power interruption within the data transmission system.

Therefore, conventionally, the CPU 103 of each data transmission apparatus 100 monitors the state of the controller 102, and the controller 102 monitors the state of the physical layer LSI 101, to detect momentary power interruptions in the data transmission system. Such detection of momentary power interruptions will be specifically described with reference to FIG. 11.

First, the data transmission apparatus (e.g., 100a) which has undergone a momentary power interruption ceases to output a signal. The absence of an output signal from such a failed data transmission apparatus means that there is no electrical signal being input to the physical layer LSI 101 of the data transmission apparatus (e.g., 100b) which lies immediately downstream from the failed data transmission apparatus. During the absence of an incoming electrical signal, the ADC 214 of the physical layer LSI 101 of the downstream data transmission apparatus (e.g., 100b) will keep outputting a substantially constant digital value. Based on this output from the ADC 214, the difference detection section 218 derives a difference value, which will be substantially zero, and outputs it to the evaluation section 220. In response, the evaluation section 220 determines the signal level of this difference value, and converts it to parallel data. The resultant output parallel data from the evaluation section 220 of the downstream data transmission apparatus (e.g., 100b) is a series of "01" and/or "10" because, while the signal level of the difference value is substantially zero, the signal level of the difference value will respectively be determined as +2 or -2 as shown in FIG. 16, which respectively correspond to the parallel data of "01" or "10" in the table shown in FIG. 17.

As mentioned above, the data which is output from the physical layer LSI 101 after serial conversion is being monitored by the controller 102. If the monitored data value is found to be a series of "01" and/or "10" for more than a predetermined period of time, the controller 102 and the CPU 103 detect that a signal of a predetermined format is no longer being output from the upstream data transmission apparatus (e.g., 100a), i.e., an error such as momentary power interruption has occurred. Thereafter, the controller 102 and the CPU 103 which have detected the momentary power interruption stop outputting a signal to the next downstream data transmission apparatus (e.g., 100c), and reset the physical layer LSI 101 within their own data transmission apparatus (e.g., 100b). As a result, the downstream data transmission apparatus (e.g., 100c) no longer receives a signal. Consequently, the controller 102 and the CPU 103 of the downstream data transmission apparatus (e.g., 100c) perform processes similar to the above to detect the occurrence of a momentary power interruption. Then, the controller 102 and the CPU 103 of the downstream data transmission apparatus (e.g., 100c) cease to output a signal to the next downstream data transmission apparatus (e.g., 100d), and reset the physical layer LSI 101 within their own data transmission apparatus (e.g., 100c). Thereafter, similar operations are repeated in any other downstream data transmission apparatus 100, until all of the data transmission apparatuses 100 within the data transmission system detect the momentary power interruption. Thus, all of the data transmission apparatuses 100a, 100b, ... etc., within the data transmission system perform a reset operation and a reboot operation (for realizing synchronization and trainings of signal level evaluation).

In the above-described technique, the controller 102 or the CPU 103 detects a momentary power interruption when the data output from the physical layer LSI 101 is a series of "01" and/or "10" for a predetermined period of time (for example, about 100 msec) or longer. However, a series of "01" and/or "10" may occur even during normal data communications in the data transmission system. Therefore, relying on one or two repetitions of "01" or "10" to detect a momentary power interruption may result in too many misdetections. Accordingly, in the conventional technique, the CPU 103 detects an error due to a momentary power interruption or the like only if such repetitions last for about 100 msec.

However, assuming that each data transmission apparatus 100 requires 100 msec to detect a momentary power interruption, the amount of time required for 64 data transmission apparatuses 100, for example, to detect a momentary power interruption will amount to 6.4 sec. Therefore, the conventional technique of momentary power interruption detection requires a very long wait time before a reboot can be finally performed after a momentary power interruption occurs (see, for example, International Publication No. WO 02/30078).

### SUMMARY OF THE INVENTION

Therefore, an object of the present invention is to provide a data transmission apparatus capable of rapidly detecting the occurrence of a momentary power interruption in a data transmission system comprising a plurality of data transmission apparatuses which are interconnected in a ring configuration.

The present invention has the following features to attain the object mentioned above. One aspect of the present invention is directed to a data transmission apparatus for transmitting a data signal in accordance with a predetermined protocol in one direction within a ring network of a plurality of data transmission apparatuses, the data signal being obtained by modulating an electrical signal of a predetermined frequency, comprising: signal determination means, data evaluation means, processing means, and evaluation stopping means. The signal determination means determines a presence or absence of a data signal from an immediately upstream data transmission apparatus in the ring network based on an amplitude of the data signal. The data evaluation means evaluates a data value of the data signal from the immediately upstream data transmission apparatus. The processing means performs a process for a result of evaluation by the data evaluation means in accordance with the predetermined protocol. The evaluation stopping means causes the data evaluation means to stop outputting a result of evaluation to the processing means if the signal determination means determines that there is no incoming data signal. Among the above features, "signal determination means", "data evaluation means", and "processing means" correspond to, respectively, a "transmission line signal detection section", an "evaluation section", and a "CPU" recited in the description of an embodiment to follow.

The data transmission apparatus may further comprise: transmission means for transmitting the data signal to an immediately downstream data transmission apparatus; and transmission stopping means for causing the transmission means to stop transmitting the data signal to the immediately downstream data transmission apparatus if the signal determination means determines that there is no incoming data signal.

The data transmission apparatus may further comprise signal extraction means for extracting the electrical signal of the predetermined frequency, wherein the signal determination means may include: threshold level storage means for storing a threshold signal level; and level comparison means for determining a presence or absence of the data signal by comparing the level of the electrical signal extracted by the signal extraction means against the threshold signal level stored in the threshold level storage means.

The data transmission apparatus may further comprise: read means for reading out, as a digital data value, a signal obtained by modulating the electrical signal of the predetermined frequency; and difference value detection means for detecting a difference value by subtracting, from the digital data value currently read out by the read means, a digital data value immediately previously read out by the read means, wherein the signal determination means determines presence or absence of the data signal based on the difference value detected by the difference value detection means.

The signal determination means may include: difference value storage means for storing a threshold difference value; and difference comparison means for determining a presence or absence of the data signal by comparing the difference value detected by the difference value detection means against the threshold difference value stored in the difference value storage means.

The data transmission apparatus may further comprise reset means for suspending transmission and reception of the data signal for a predetermined period if the signal determination means determines that there is no incoming data signal.

When resetting a setting made in the data transmission apparatus during a boot of the ring network, the reset means may suspend transmission and reception of the data signal for a period which is equal to or greater than a result of the multiplication: [a number obtained by subtracting one from the number of data transmission apparatuses in the ring network] × [an amount of time required before the transmission stopping means is able to stop transmission of the data signal after the inputting of the data signal to the signal determination means stops].

The data transmission apparatus may further comprise lock signal outputting means for transmitting a lock signal for establishing clock synchronization to an immediately downstream data transmission apparatus if suspension of transmission and reception of the data signal by the reset means is released.

The data transmission apparatus may further comprise training signal outputting means for, after the lock signal is transmitted by the lock signal outputting means, transmitting a training signal for adjusting evaluation levels used for the data value evaluation by each data transmission apparatus in the ring network.

The predetermined protocol may be MOST (Media Oriented Systems Transport).

Another aspect of the present invention is directed to a data transmission system comprising a plurality of aforementioned data transmission apparatuses.

Thus, in accordance with the data transmission apparatus of the present invention, the presence/absence of a data signal transmitted from the data transmission apparatus is determined based on the amplitude of the data signal. Since the data signal is known to be always fluctuating, the data transmission apparatus can easily and quickly determine the presence/absence of a data signal by monitoring such fluctuations. As a result, failure to transmit a data signal due to a momentary power interruption can be instantaneously recognized.

By ensuring that the operation of each data transmission apparatus is suspended for a predetermined period or longer, the data transmission apparatus is prevented from beginning to operate before all of the data transmission apparatuses in the system have recognized the absence of a data signal being transmitted. Preferable, this predetermined period of time is equal to or greater than a result of the multiplication: [a number obtained by subtracting one from the number of data transmission apparatuses in the ring network] × [an amount of time required before the transmission stopping means is able to stop transmission of the data signal after the inputting of an electrical signal to the signal determination means stops] . In this case, all of the data transmission apparatuses in the data transmission system are allowed to recognize absence of a data signal being transmitted.

By ensuring that a master data transmission apparatus transmits a lock signal after a suspension of operation by the reset means is released, it becomes possible to establish clock synchronization within the system. Furthermore, after transmitting the lock signal, the master data transmission apparatus may transmit a training signal to set evaluation levels to be used for signal level evaluation in the system.

These and other objects, features, aspects and advantages of the present invention will become more apparent from the following detailed description of the present invention when taken in conjunction with the accompanying drawings.

### BRIEF DESCRIPTION OF THE DRAWINGS

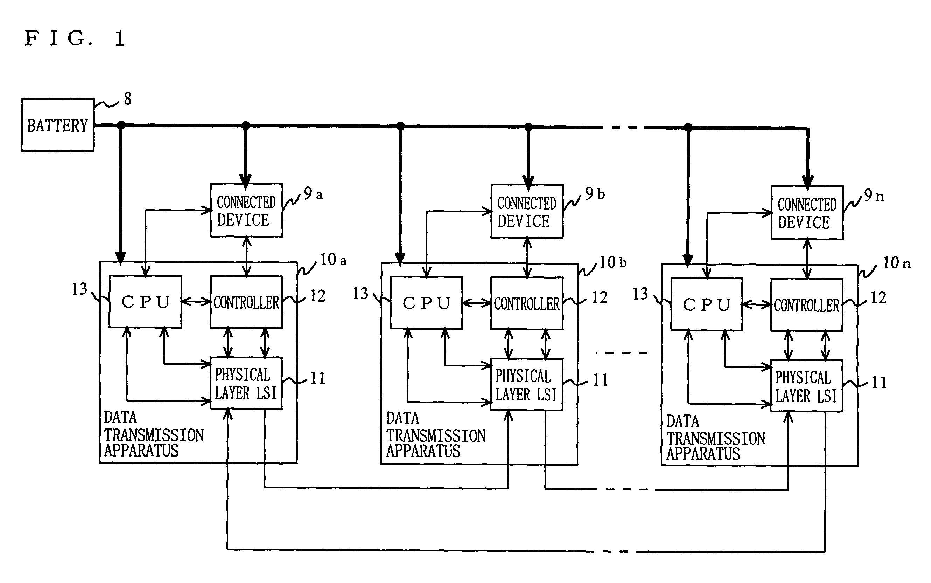

FIG. 1 is a block diagram illustrating the structure of a data transmission system according to an embodiment of the present invention;

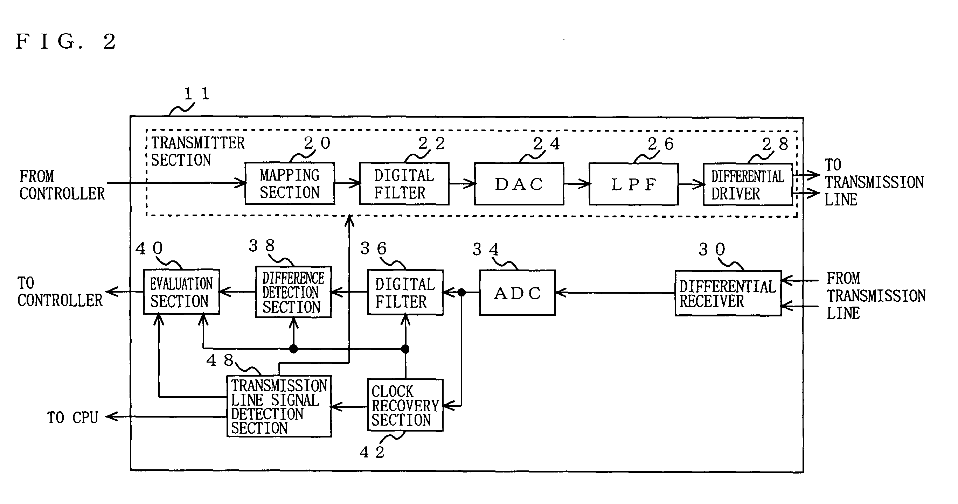

FIG. 2 is a block diagram illustrating the structure of a physical layer LSI according to an embodiment of the present invention;

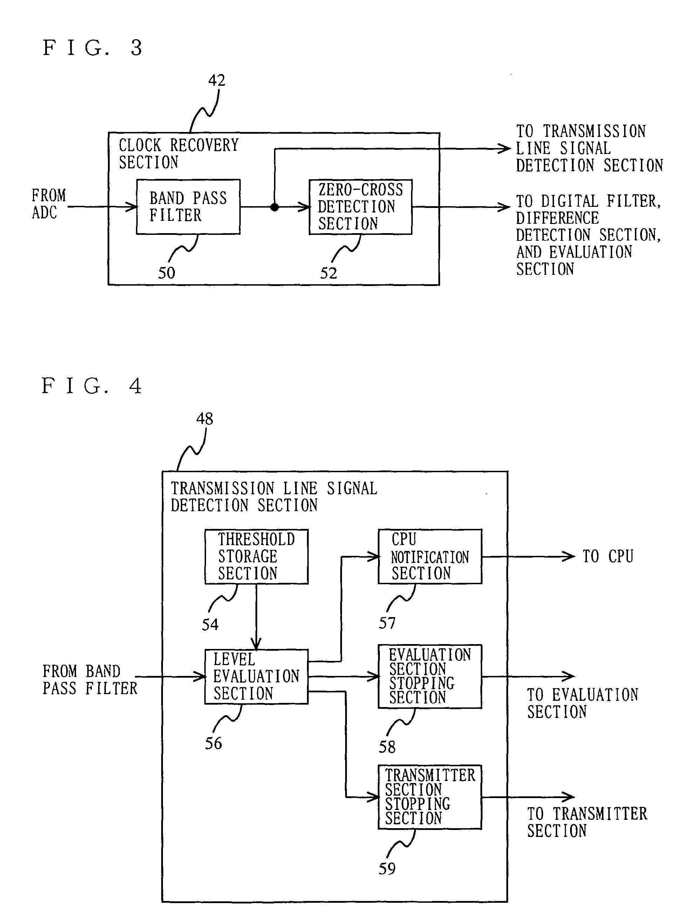

FIG. 3 is a block diagram illustrating the structure of a clock recovery section according to an embodiment of the present invention;
FIG. 4 is a block diagram illustrating the structure of a transmission line signal detection section according to an embodiment of the present invention;

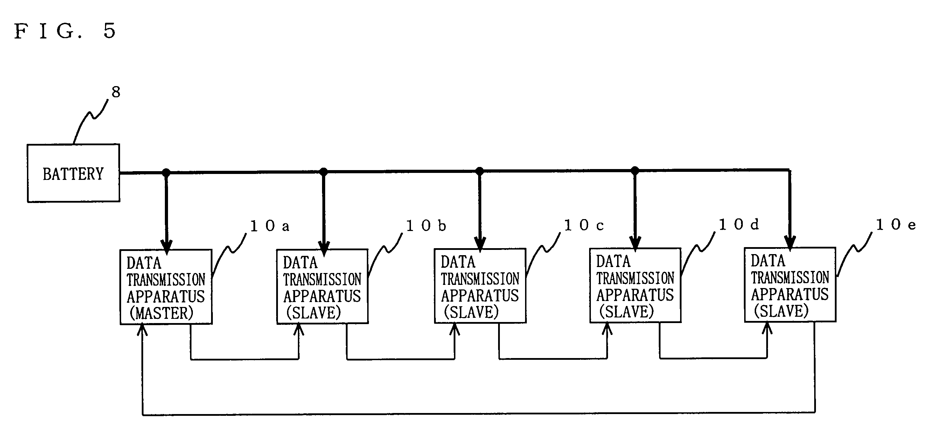

FIG. 5 is a block diagram schematically illustrating a data transmission system according to an embodiment of the present invention;

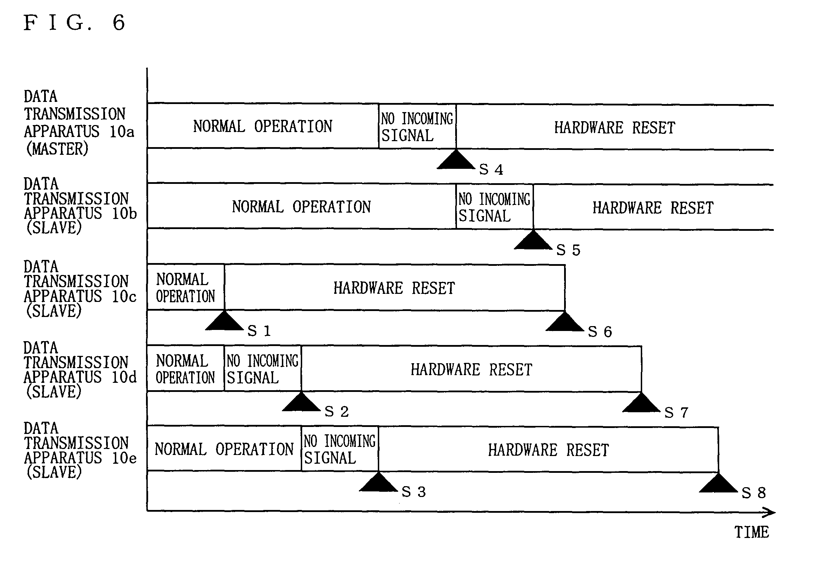

FIG. 6 is a sequence diagram illustrating an operation of a data transmission system according to an embodiment of the present invention;

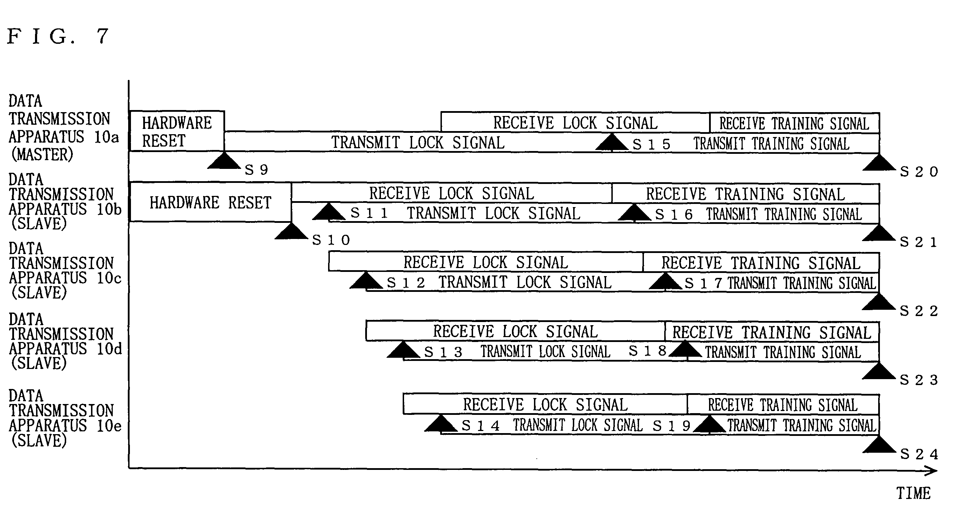

FIG. 7 is a sequence diagram illustrating an operation of a data transmission system according to an embodiment of the present invention;

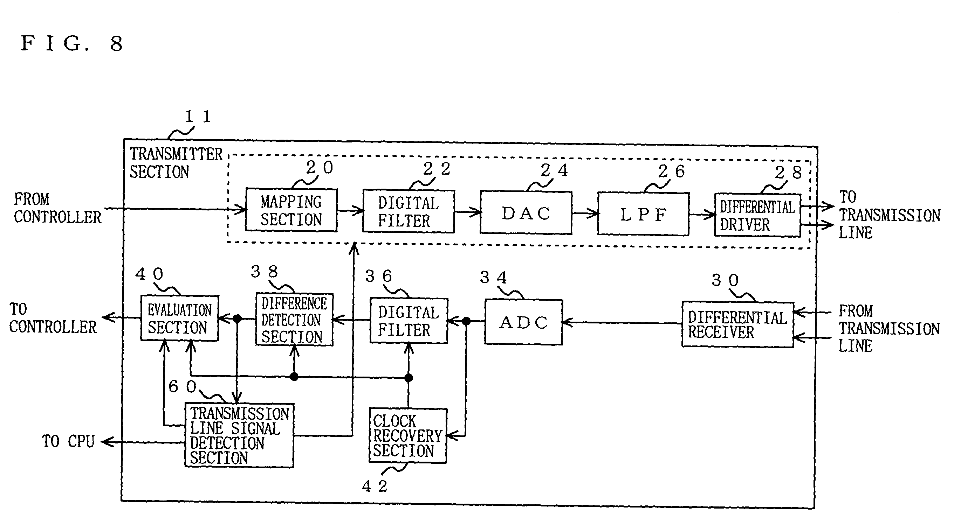

FIG. 8 is a block diagram illustrating the structure of a physical layer LSI and other elements of a data transmission apparatus according to an embodiment of the present invention;

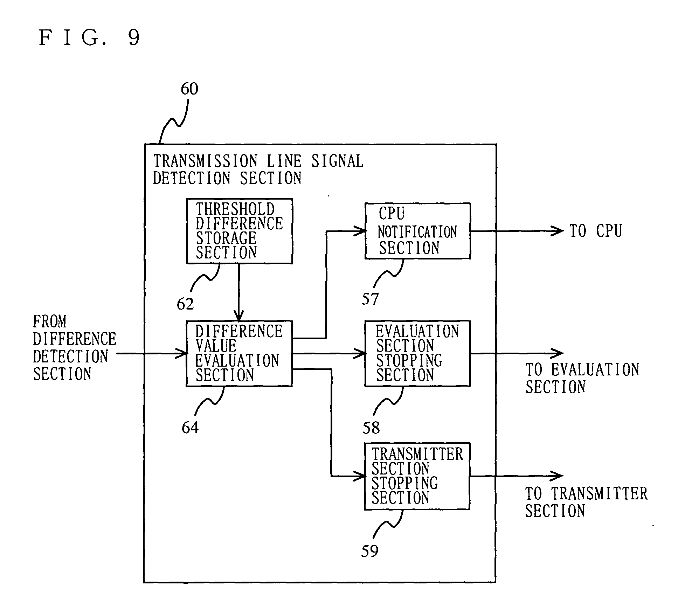

FIG. 9 is a block diagram illustrating the structure of a transmission line signal detection section according to an embodiment of the present invention;
FIG. 10 is a block diagram illustrating the structure of a conventional data transmission system;
FIG. 11 is a block diagram illustrating the structure of a conventional physical layer LSI;
FIG. 12 is a table illustrating a relationship between parallel data, a symbol value B(k) to which the parallel data is to be mapped, and a symbol value B(k-1) which comes immediately previous to the symbol value B(k);
FIG. 13 is a diagram illustrating the waveform of an analog signal into which the digital data obtained through the mapping by a mapping section is converted by a DAC;
FIG. 14 is a diagram illustrating the waveform of the analog signal into which the digital data obtained through the mapping by the mapping section is converted by the DAC;
FIG. 15 is a diagram illustrating an analog signal which is output from a differential driver;
FIG. 16 is a diagram illustrating evaluation levels used by an evaluation section to determine the magnitude of a given difference value; and
FIG. 17 is a table used for converting the signal level determined by the evaluation section to parallel data.

### DESCRIPTION OF THE PREFERRED EMBODIMENTS

Hereinafter, a data transmission apparatus according to an embodiment of the present invention and a data transmission system comprising a plurality of such data transmission apparatuses will be described with reference to the figures. FIG. 1 is a block diagram illustrating the overall structure of a data transmission system comprising a plurality of data transmission apparatuses according to the present embodiment of the present invention.

In FIG. 1, the data transmission system adopts a ring topology as its physical topology, i.e., a plurality of nodes are connected in a ring topology forming a unidirectional ring-type LAN. Hereinafter, an exemplary data transmission system will be described in which data transmission apparatuses 10a, ... etc., function as nodes that are interconnected in a ring fashion via transmission lines, through which data is transmitted in one direction. Devices 9a, ... etc., (for example, audio devices, navigation devices, information terminal devices, and the like) are connected respectively to the data transmission apparatuses 10a, ... etc. Each of the devices 9a, ... etc., performs a process using the data which has been transmitted across the data transmission system, and outputs a result of the processing back to the data transmission system. Note that, in terms of hardware construction, it is commonplace to integrate the data transmission apparatuses 10a, 10b, ... etc., and the connected devices 9a, 9b, ... etc., into one unit. A common battery 8 supplies power to the data transmission apparatuses 10a, 10b, ... etc., and the connected devices 9a, 9b, ... etc.

MOST may be used as an information communication protocol for the above data transmission system. According to MOST, data is transmitted on a frame-by-frame basis, such that frames are sequentially transmitted in one direction from data transmission apparatus 10 to data transmission apparatus 10. In other words, the data transmission apparatus 10a outputs data to the next data transmission apparatus 10b via a transmission line. In turn, the data transmission apparatus 10b outputs data to the next data transmission apparatus 10c via a transmission line. Similarly, each of the subsequent data transmission apparatuses 10c, etc., outputs data to each next data transmission apparatus by performing a similar operation to that performed by the data transmission apparatus 10b. The data which is output from the last data transmission apparatus 10n is input to the data transmission apparatus 10a. Twisted pair cables, coaxial cables, or other inexpensive cables are used as the transmission lines with which the data transmission apparatuses 10 perform electrical communications with one another. When power to the data transmission system is turned on, the data transmission apparatus 10a functions as a master apparatus which transmits data in accordance with its own clock, whereas the other data transmission apparatuses 10b, etc., function as slave apparatuses which operate in synchronization with the clock generated by the master apparatus.

Referring to FIG. 1, the structure of each data transmission apparatus 10 will be described in more detail. Each data transmission apparatus 10 includes a physical layer LSI 11, a controller 12, and a CPU 13. Based on a protocol defined under MOST, the controller 12 converts the data from each connected device 9 into serial data, and outputs the serial data to the physical layer LSI 11. Conversely, the controller 12 converts the digital data output from the physical layer LSI 11 to a format which complies with the device 9 connected thereto, and outputs the converted data to the connected device 9. The CPU 13 controls the operations of the controller 12, the physical layer LSI 11, and the connected device 9.

The physical layer LSI 11 converts the digital data output from the controller 12 to an electrical signal, and outputs the electrical signal to an immediately downstream data transmission apparatus 10. Furthermore, the physical layer LSI 11 converts the electrical signal output from an immediately upstream data transmission apparatus 10 to digital data, and outputs the result to the controller 12. FIG. 2 is a block diagram illustrating the structure of the physical layer LSI 11. As shown in FIG. 2, the physical layer LSI 11 includes a mapping section 20, a digital filter 22, a DAC (digital to analog converter) 24, an LPF (low pass filter) 26, a differential driver 28, a differential receiver 30, an ADC (analog to digital converter) 34, a digital filter 36, a difference detection section 38, an evaluation section 40, a clock recovery section 42, and a transmission line signal detection section 48. The mapping section 20, the digital filter 22, the DAC 24, the LPF 26, and the differential driver 28, which are means for transmitting data, will collectively be referred to as a "transmitter section".

The mapping section 20 converts data output from the controller 12 to 2-bit parallel data, and maps the parallel data to one of eight symbol values, in accordance with a clock. Now, the mapping performed by the mapping section 20 will be specifically described with reference to FIGS. 12 to 14. FIG. 12 is a table illustrating a relationship between parallel data, a symbol value B(k) to which the parallel data is to be mapped, and a symbol value B(k-1) which comes immediately previous to the symbol value B(k). FIGS. 13 and 14 are diagrams illustrating the waveform of an analog signal into which the digital data obtained through the mapping by the mapping section 20 is converted by the DAC 24.

Two-bit parallel data such as "00" or "01" is input to the mapping section 20. In accordance with the table shown in FIG. 12, the mapping section 20 maps the input data to one of the eight values: +7, +5, +3, +1, -1, -3, -5, or -7. A specific example of the mapping method will be described below.

For example, if the previous symbol value B(k-1) is -1, and the mapping section 20 receives the parallel data "00", then the current symbol value B(k) will be +7 according to FIG. 12. On the other hand, if the previous symbol value B(k-1) is +5, and the mapping section 20 receives the parallel data "01", then the current symbol value B(k) will be -1. Thus, according to this mapping method, a current symbol value B(k) is determined based on the previous symbol value B(k-1) and the received parallel data. In this manner, the symbol value B(k) is mapped alternately to either a positive value or a negative value. The symbol value B(k) thus determined is input to the DAC 24 via the digital filter 22.

Based on the incoming symbol value B(k), the DAC 24 generates an analog signal as shown in FIGS. 13 and 14. FIGS. 13 and 14 will now be described in detail.

FIG. 13 is a diagram illustrating the symbol value B(k) when the parallel data "00", "01", "11" or "10" is input in the case where the previous symbol value B(k-1) is +7, +5, +3 or +1. FIG. 13 shows that the current symbol value B(k) of the generated analog signal is -1 if the serial data "00" is input in the case where the previous symbol value B(k-1) is +7, for example.

FIG. 14 is a diagram illustrating the symbol value B(k) when the parallel data "00", "01", "11" or "10" is input in the case where the previous symbol value B(k-1) is -7, -5, -3 or -1. FIG. 14 shows that the current symbol value B(k) of the generated analog signal is +1 if the serial data "00" is input in the case where the previous symbol value B(k-1) is -7, for example.

Now, an exemplary analog signal which is generated according to the above principles will be described. FIG. 15 is a diagram illustrating an analog signal which is output from the differential driver 28 when the parallel data "00", "00", "11" and "01" are sequentially input in the case where the first symbol value B(n) is +1.

Since the first symbol value B(n) is +1, the data is mapped to +1. When the parallel data "00" is next input, the data is mapped to -7, based on the rightmost wave shown in FIG. 13. Then, when the parallel data "00" is input, the data is mapped to +1 based on the leftmost wave shown in FIG. 14. Then, when the parallel data "11" is input, the data is mapped to -3 based on the rightmost wave shown in FIG. 13. Then, when the parallel data "01" is input, the data is mapped to +7 based on the second rightmost wave shown in FIG. 14. The analog signal as shown in FIG. 15 is generated through such processes.

The digital filter 22 is a wave-shaping filter for applying a band restriction and minimizing the inter-symbol interference in the electrical signal to be transmitted. As the digital filter 22, for example, an FIR filter (45 taps; 10 bits) which allocates the roll-off rate of 100% into routes with a sampling frequency which is six times the symbol rate may be used.

The DAC 24 converts the signal which has been subjected to the band restriction by the digital filter 22 into an analog signal. In the output signal from the DAC 24, the LPF 26 attenuates frequency components higher than its signal band. The differential driver 28 amplifies the level of the analog signal output from the LPF 26, converts it to a differential signal, and outputs it onto the transmission line consisting of a pair of wires. Specifically, the differential driver 28 sends out the electrical signal to be transmitted onto one (plus side) of the wires of the transmission line, and sends out a signal having an opposite polarity to this electrical signal onto the other wire (minus side) of the transmission line. As a result, a pair of plus and minus electrical signals are transmitted on the transmission line, whereby the radiation noise from the transmission line can be reduced.

The differential signal which has thus been sent out on the transmission line is received by the differential receiver 30 in the immediately downstream data transmission apparatus, which converts the differential signal to a voltage signal for output to its ADC 34. Since a pair of plus and minus electrical signals are transmitted by the pair of wires of the transmission line as described above, the differential receiver 30 can eliminate electrical influences from external sources by judging the signal based on a difference between the plus side and the minus side. The ADC 34 converts the output signal from the differential receiver 30 to a digital signal, in accordance with a clock.

The clock recovery section 42 performs a clock recovery by recovering a signal of a predetermined frequency (e.g., 12.5 MHz) which is constantly contained in the output signal from the ADC 34. Hereinafter, the structure of the clock recovery section 42 will be described with reference to the figures. FIG. 3 is a block diagram illustrating the structure of the clock recovery section 42.

As shown in FIG. 3, the clock recovery section 42 includes a band pass filter 50 and a zero-cross detection section 52. The band pass filter 50 extracts a signal of a predetermined frequency which is constantly contained in the output signal from the ADC 34. The zero-cross detection section 52 detects a moment at which the level of the signal of the predetermined frequency becomes zero (hereinafter referred to as a "zero-cross point"), and generates a clock signal whose pulses occur at zero-cross points. The generated clock signal is used as a clock for the digital filter 36, the difference detection section 38, and the evaluation section 40.

As the digital filter 36 which removes noise from the digital signal output from the ADC 34, an FIR filter for wave-shaping purposes, e.g., an FIR filter having a sampling frequency which is 20 times the symbol rate, may be used. In conjunction with the transmitting-end digital filter 22 described above, digital filter 36 realizes roll-off characteristics free of inter-symbol interferences.

From the digital data value which is output from the digital filter 36, the difference detection section 38 subtracts the digital data value which existed one symbol before, and outputs the calculated difference to the evaluation section 40. For example, in the case where a signal having a waveform as shown in FIG. 15 is input to the physical layer LSI 11, digital data values +1, -7, +1, -3 and +7 are sequentially output from the digital filter 36. Therefore, the difference detection section 38 first subtracts +1 from -7 and outputs -8 to the evaluation section 40. Next, the difference detection section 38 subtracts -7 from +1 to output +8; subtracts +1 from -3 to output -4; and subtracts -3 from +7 to output +10.

The evaluation section 40 determines the magnitude of the difference value which is output from the difference detection section 38, and converts the determined data value to 2-bit parallel data. Hereinafter, with reference to FIGS. 16 and 17, the determination process by the evaluation section 40 will be described in detail. FIG. 16 is a diagram illustrating the evaluation levels used by the evaluation section 40 to determine the magnitude of a given difference value. For example, FIG. 16 shows that a difference value whose level falls within a range indicated by the arrow will be determined as having a signal level of +14. FIG. 17 is a table used for converting the signal level determined by the evaluation section 40 to parallel data. For example, FIG. 17 shows that a difference value whose signal level is determined to be +8 or -8 will be converted to the parallel data "00". The table shown in FIG. 17 is generated based on the table shown in FIG. 12.

Evaluation levels as shown in FIG. 16, to be used in the evaluation of signal levels, are set in the evaluation section 40. Thus, the evaluation section 40 determines the signal level of each difference value obtained through subtraction in accordance with the evaluation levels shown in FIG. 16. Then, the evaluation section 40 converts the determined signal level to parallel data based on the table shown in FIG. 17, and converts it to serial data for output. Hereinafter, the operation of the evaluation section 40 in an exemplary case will be described.

For example, if a signal having a waveform as shown in FIG. 15 is input to the physical layer LSI 11, difference values -8, +8, -4 and +10 are sequentially output from the difference detection section 38, as described above. The evaluation section 40 determines the signal level of each output difference value on the basis of the evaluation levels shown in FIG. 16. Specifically, the evaluation section 40 determines the signal levels of the difference values to be -8, +8, -4 and +10, respectively. Next, based on the table shown in FIG. 17, the evaluation section 40 converts the signal levels of the difference values to the parallel data "00", "00", "11" and "01", respectively, and converts them to serial data, which are output to the controller 12.

Now, the transmission line signal detection section 48, which forms a characteristic portion of the data transmission apparatus according to the present embodiment of the invention, will be specifically described with reference to the figures. Based on the level of the output signal from the band pass filter 50 of the clock recovery section 42, the transmission line signal detection section 48 determines whether an electrical signal is being output from an immediately upstream data transmission apparatus 10. FIG. 4 is a block diagram illustrating the detailed structure of the transmission line signal detection section 48.

As shown in FIG. 4, the transmission line signal detection section 48 includes a threshold storage section 54, a level evaluation section 56, a CPU notification section 57, an evaluation section stopping section 58, and a transmitter section stopping section 59. The threshold storage section 54 stores a threshold for determining the level of the output signal from the band pass filter 50. The level evaluation section 56 compares the level of the output signal from the band pass filter 50 against the threshold stored in the threshold storage section 54, and outputs the result of the comparison to the CPU notification section 57, the evaluation section stopping section 58, and the transmitter section stopping section 59.

The CPU notification section 57 notifies the result of the determination by the level evaluation section 56 to the CPU 13. Specifically, if the result indicates that the threshold stored in the threshold storage section 54 is greater than the level of the output signal from the band pass filter 50, the CPU notification section 57 outputs to the CPU 13 a HIGH voltage indicating that an electrical signal is being output from the immediately upstream data transmission apparatus 10. On the other hand, if the result indicates that the threshold stored in the threshold storage section 54 is not greater than the level of the output signal from the band pass filter 50, the CPU notification section 57 outputs to the CPU 13 a LOW voltage indicating that no electrical signal is being output from the immediately upstream data transmission apparatus 10.

If the threshold stored in the threshold storage section 54 is greater than the level of the output signal from the band pass filter 50, the evaluation section stopping section 58 allows the evaluation section 40 to perform the usual evaluation operation. On the other hand, if the threshold stored in the threshold storage section 54 is not greater than the level of the output signal from the band pass filter 50, the evaluation section stopping section 58 causes the evaluation section 40 to stop its evaluation operation, whereafter the evaluation section 40 will output a series of "0" .

If the threshold stored in the threshold storage section 54 is greater than the level of the output signal from the band pass filter 50, the transmitter section stopping section 59 allows the transmitter section to perform the usual transmission operation. On the other hand, if the threshold stored in the threshold storage section 54 is not greater than the level of the output signal from the band pass filter 50, the evaluation section 58 causes the transmitter section to stop its operation, i.e., so that the data output from the data transmission apparatus 10 to the downstream data transmission apparatus is stopped.

Hereinafter, the operations of the data transmission apparatus and the data transmission system having the above-described construction will be described with reference to the figures. FIG. 5 is a block diagram schematically illustrating a data transmission system according to the present embodiment of the invention. FIGS. 6 and 7 are sequence diagrams illustrating operations of a data transmission system according to the present embodiment of the invention. For conciseness, the following description illustrates the case where the data transmission system includes five data transmission apparatuses 10a, 10b, 10c, 10d and 10e, among which the data transmission apparatus 10a is a master and the other data transmission apparatuses 10b to 10e are slaves. For simplicity, the connected device 9 and other elements are omitted from FIG. 5.

It is assumed that the data transmission system according to the present embodiment is already operating in a state where an electrical signal containing data is being normally transmitted in the direction of the arrows as shown in FIG. 5 (hereinafter, this state will be referred to as the "normal operation"). If the voltage of the battery 8 has a momentary dip (e.g., due to a connected device 9 in the data transmission system beginning to operate), resulting in a momentary power interruption of the data transmission apparatus 10c, the data transmission apparatus 10c no longer performs a normal operation. In other words, the data transmission apparatus 10c stops outputting an electrical signal to the immediately downstream data transmission apparatus 10d (step S1). Thereafter, the data transmission apparatus 10c performs a hardware reset for a predetermined period of time. Specifically, the data transmission apparatus 10c controls the physical layer LSI 11 so as to suspend transmission/reception of electrical signals for the aforementioned predetermined period.

As a result of the data transmission apparatus 10c ceasing to output an electrical signal to the data transmission apparatus 10d at step S1, no more electrical signal is input to the data transmission apparatus 10d. Detecting the absence of an input electrical signal, the data transmission apparatus 10d stops outputting an electrical signal to the immediately downstream data transmission apparatus 10e (step S2). Thereafter, data transmission apparatus 10d performs a hardware reset for a predetermined period of time. Specifically, the data transmission apparatus 10d controls the physical layer LSI 11 so as to suspend transmission/reception of electrical signals for the aforementioned predetermined period. Hereinafter, the operation performed by the data transmission apparatus 10d at step S2 will be described with reference to FIGS. 2 to 4.

Once the data transmission apparatus 10c stops outputting an electrical signal, no more electrical signal is input to the differential receiver 30, the LPF 32, and the ADC 34. Since there is no incoming electrical signal, the ADC 34 outputs a data value which is substantially "0" to the digital filter 36 and the clock recovery section 42. In response, the band pass filter 50 of the clock recovery section 42 shown in FIG. 3 extracts a predetermined frequency contained in the data value which is output from the ADC 34 (e.g., 12.5 MHz in the present embodiment), and outputs it to the zero-cross detection section 52 and the transmission line signal detection section 48.

The level evaluation section 56 of the transmission line signal detection section 48 shown in FIG. 4 compares the data value output from the band pass filter 50 against the threshold stored in the threshold storage section 54 . Since the ADC 34 is outputting a substantially constant data value to the digital filter 36, the output from the band pass filter 50 to the level evaluation section 56 is also a signal having a substantially "0" level. Thus, the level evaluation section 56 determines that the data value output from the band pass filter 50 is smaller than the threshold, and notifies this determination to the CPU notification section 57, the evaluation section stopping section 58, and the transmitter section stopping section 59. In response, the CPU notification section 57 switches the output voltage to the CPU 13 from HIGH to LOW. Moreover, the evaluation section stopping section 58 causes the evaluation section 40 to stop its evaluation operation. Furthermore, the transmitter section stopping section 59 causes the transmitter section to stop outputting an electrical signal.

Thus, the evaluation section 40 stops its evaluation operation. As a result, the evaluation section 40 keeps outputting a data series of "0". Since it is known that a series of "0" will never be output to the MOST controller 12 during normal communications, the MOST controller 12 recognizes that no data is coming from the upstream data transmission apparatus 10c. Moreover, the transmitter section stopping section 59 causes the transmitter section to stop its data transmitting operation. Furthermore, the CPU 13 detects an edge corresponding to the moment of the voltage switching from HIGH to LOW, and recognizes that there is no more electrical signal being output from the immediately upstream data transmission apparatus 10c. Accordingly, the CPU 13 performs a hardware reset for the data transmission apparatus 10d to suspend the operation of the data transmission apparatus 10d for a predetermined period of time.

Now, referring to FIG. 6, the operation of the data transmission system will be further described. Once the outputting of an electrical signal from the data transmission apparatus 10d is stopped, there is no more incoming electrical signal to the data transmission apparatus 10e, which lies immediately downstream from the data transmission apparatus 10d. Therefore, the data transmission apparatus 10e performs an operation similar to that performed by the data transmission apparatus 10d to stop outputting an electrical signal to the data transmission apparatus 10a, which lies "downstream" to the data transmission apparatus 10e, and performs a hardware reset for the data transmission apparatus 10a (step S3). This process is similar to that of step S2, and the description thereof is omitted.

Once the outputting of an electrical signal from the data transmission apparatus 10e is stopped, there is no more incoming electrical signal to the data transmission apparatus 10a, which lies immediately downstream from the data transmission apparatus 10e. Therefore, the data transmission apparatus 10a performs an operation similar to that performed by the data transmission apparatus 10d to stop outputting an electrical signal to the data transmission apparatus 10b, which lies downstream to the data transmission apparatus 10a, and performs a hardware reset for the data transmission apparatus 10b (step S4). This process is similar to that of step S2, and the description thereof is omitted.

Once the outputting of an electrical signal from the data transmission apparatus 10a is stopped, there is no more incoming electrical signal to the data transmission apparatus 10b, which lies immediately downstream from the data transmission apparatus 10a. Therefore, the data transmission apparatus 10b performs an operation similar to that performed by the data transmission apparatus 10d to stop outputting an electrical signal to the data transmission apparatus 10c, which lies downstream to the data transmission apparatus 10b, and performs a hardware reset for the data transmission apparatus 10c (step S5). This process is similar to that of step S2, and the description thereof is omitted. Thus, through the processes of steps S1 to S5, all of the data transmission apparatuses 10a to 10e within the data transmission system can recognize the momentary power interruption which has occurred in one of the data transmission apparatuses in the data transmission system, i.e., the data transmission apparatus 10c.

Next, as shown in FIG. 6, the hardware reset for the data transmission apparatuses 10c, 10d, and 10e is released (steps S6 to s8). That is, the data transmission apparatuses 10c, 10d, and 10e again become able to operate. Then, the hardware reset for the data transmission apparatus 10a is released. Thereafter, a reboot operation is begun in the data transmission system according to the present embodiment. Hereinafter, the reboot operation will be described.

First, the data transmission apparatus 10a transmits a lock signal to establish clock synchronization with the data transmission apparatuses 10b to 10e in the transmission system (step S9). The data transmission apparatus 10b, whose hardware reset has been released at step S10, receives the lock signal which is output from the data transmission apparatus 10a, performs a lock detection (i.e., synchronization), and outputs the received lock signal to the data transmission apparatus 10c (step S11).

Upon receiving a lock signal from the data transmission apparatus 10b, the data transmission apparatus 10c performs a lock detection, and outputs the received lock signal to the data transmission apparatus 10d (step S12). Upon receiving the lock signal from the data transmission apparatus 10c, the data transmission apparatus 10d performs a lock detection, and outputs the received lock signal to the data transmission apparatus 10e (step S13). Upon receiving the lock signal from the data transmission apparatus 10d, the data transmission apparatus 10e performs a lock detection, and outputs the received lock signal to the data transmission apparatus 10a (step S14). The data transmission apparatus 10a receives this lock signal, and performs a lock detection. As a result, clock synchronization is established among the data transmission apparatuses 10a to 10e in the data transmission system.

Next, the data transmission apparatus 10a outputs a training signal to the data transmission apparatus 10b in order to set a set of evaluation levels in the evaluation section 40 of each of the data transmission apparatuses 10a to 10e (step S15). Based on the received training signal, the data transmission apparatus 10b sets the evaluation levels in its evaluation section 40. Then, the data transmission apparatus 10b transmits the training signal to the immediately downstream data transmission apparatus 10c (step S16).

Next, the data transmission apparatus 10c receives the training signal, and based on the received training signal, sets the evaluation levels in its evaluation section 40. Then, the data transmission apparatus 10c transmits the training signal to the immediately downstream data transmission apparatus 10d (step S17).

Next, the data transmission apparatus 10d receives the training signal, and based on the received training signal, sets the evaluation levels in its evaluation section 40. Then, the data transmission apparatus 10d transmits the training signal to the immediately downstream data transmission apparatus 10e (step S18).

Next, the data transmission apparatus 10e receives the training signal, and based on the received training signal, sets the evaluation levels in its evaluation section 40. Then, the data transmission apparatus 10e transmits the training signal to the immediately downstream data transmission apparatus 10a (step S19).

Next, the data transmission apparatus 10a receives the training signal. Thereafter, the data transmission apparatuses 10a to 10e transition to their normal operation (steps S20 to S24).

Thus, in accordance with the data transmission apparatus and the data transmission system of the present embodiment, each data transmission apparatus in the system can recognize the occurrence of a momentary power interruption more quickly than in conventional systems. As a result, the amount of time required to reboot the entire data transmission system to restart a normal operation is reduced. Hereinafter, this principle will be described in detail.

Conventionally, the CPU 13 determines the presence or absence of an electrical signal based on the data which is output from the evaluation section 40. However, even during the absence of an electrical signal, the data which is output from the evaluation section 40 will be a series of "01" and/or "10", rather than a complete repetition of "00". Such a series of parallel data "01" and/or "10" may occur even during a normal operation. Therefore, if the CPU 13 detected an error due to a momentary power interruption (i.e., absence of an electrical signal) or the like by merely relying on one or two repetitions of such parallel data, too many misdetections of absence of an electrical signal would result. In order to avoid this problem, in accordance with the conventional data transmission apparatus, the CPU 103 detects data errors, and detects a momentary power interruption only if such repetitions last for about 100 msec or more.

According to MOST, an incoming electrical signal to a data transmission apparatus is of such a nature that its level is periodically fluctuating even if the data values contained therein are all "0". Therefore, in the presence of an incoming electrical signal, the data value which is output from the ADC of the data transmission apparatus will be periodically fluctuating even if the data values contained in the electrical signal are all "0". On the other hand, in the absence of an incoming electrical signal, the data value which is output from the ADC of the data transmission apparatus is substantially constant. Thus, it will be understood that the presence/absence detection of an electrical signal can be more securely made based on the level of the electrical signal than on the parallel data emanating therefrom. Therefore, as compared to the conventional technique of detecting the presence/absence of an electrical signal by monitoring parallel data by means of a CPU, the present embodiment of the invention can provide a quick detection method because the presence/absence of an electrical signal is determined at the physical layer LSI. For instance, the presence/absence detection of an electrical signal in the transmission line signal detection section of the physical layer LSI can be made in about 100 µsec. As a result, the amount of time required to reboot the entire data transmission system after the occurrence of a momentary power interruption can be reduced.

Although the present embodiment illustrates an example where the presence/absence of an electrical signal is determined based on the level of a signal of a predetermined frequency which is output from the clock recovery section 42, other methods of presence/absence determination may also be used. For example, the presence/absence determination may be made based on an output from the difference detection section 38 in the data transmission apparatus, as described below. FIG. 8 is a block diagram illustrating the internal structure of the physical layer LSI 11 of the data transmission apparatus 10 in this case. FIG. 9 is a block diagram illustrating the internal structure of the transmission line signal detection section 60.

The physical layer LSI 11 shown in FIG. 8 includes a mapping section 20, a digital filter 22, a DAC 24, an LPF 26, a differential driver 28, a differential receiver 30, an ADC 34, a digital filter 36, a difference detection section 38, an evaluation section 40, a clock recovery section 42, and a transmission line signal detection section 60. Those component elements which also appear in FIG. 2 are denoted by the same reference numerals as those used therein. The descriptions concerning the mapping section 20, the digital filter 22, the DAC 24, the LPF 26, the differential driver 28, the differential receiver 30, the ADC 34, the digital filter 36, the difference detection section 38, the evaluation section 40, and the clock recovery section 42, which have their identical counterparts in FIG. 2, are omitted.

As shown in FIG. 8, the transmission line signal detection section 60 is connected to the difference detection section 38, the evaluation section 40, and the CPU 13. As shown in FIG. 9, the transmission line signal detection section 60 includes a threshold difference storage section 62, a difference value evaluation section 64, a CPU notification section 57, an evaluation section stopping section 58, and a transmitter section stopping section 59. The threshold difference storage section 62 stores a predetermined difference value which serves as a threshold. The difference value evaluation section 64 compares the difference value which is output from the difference detection section 38 against the difference value stored in the threshold difference storage section 62. In the absence of an incoming electrical signal to the data transmission apparatus, the ADC 34 is outputting a substantially constant data value to the digital filter 36, so that the output from the digital filter 36 to the difference detection section 38 is also a signal having a substantially "0" level. Consequently, the difference value which is output from the difference detection section 38 to the difference value evaluation section 64 is substantially "0" . In such a state, the difference value evaluation section 64 can determine that there is no incoming electrical signal to the data transmission apparatus, and notify this determination to the CPU notification section 57, the evaluation section stopping section 58, and the transmitter section stopping section 59. The operations to be thereafter performed by the evaluation section 40, the transmitter section, and the CPU 13 are similar to those described in the above embodiment, and the descriptions thereof are omitted. Thus, taking advantage of the fact that parallel data from an electrical signal is read based on difference values in the physical layer LSI 11, the presence/absence detection of an electrical signal can be made based on fluctuations in the difference values.

During the aforementioned hardware reset, the CPU 13 suspends the operation of the physical layer LSI for "a predetermined period of time". Preferable, this predetermined period of time is equal to or greater than a result of the multiplication: [a number obtained by subtracting one from the number of data transmission apparatuses in the data transmission system] × [an amount of time required before the CPU 13 is able to stop electrical signal transmission after the inputting of an electrical signal to the physical layer LSI stops]. By setting the predetermined period of time at such a value, it is ensured that the hardware reset is released after all of the data transmission apparatuses in the data transmission system have recognized a momentary power interruption. As a result, the data transmission apparatus is prevented from beginning to operate before all of the data transmission apparatuses have recognized a momentary power interruption, thus forestalling malfunctioning of the data transmission apparatuses.

While the invention has been described in detail, the foregoing description is in all aspects illustrative and not restrictive. It is understood that numerous other modifications and variations can be devised without departing from the scope of the invention.

## Claims

1. A data transmission apparatus for transmitting a data signal in accordance with a predetermined protocol in one direction within a ring network of a plurality of data transmission apparatuses, the data signal being obtained by modulating an electrical signal of a predetermined frequency, comprising:
signal determination means (48, 60) for determining a presence or absence of a data signal from an immediately upstream data transmission apparatus in the ring network based on an amplitude of the data signal;
data evaluation means (40) for evaluating a data value of the data signal from the immediately upstream data transmission apparatus;
processing means (13) for performing a process for a result of evaluation by the data evaluation means (40) in accordance with the predetermined protocol; and
evaluation stopping means (58) for causing the data evaluation means (40) to stop outputting a result of evaluation to the processing means (13) if the signal determination means (48, 60) determines that there is no incoming data signal.

2. The data transmission apparatus according to claim 1, further comprising:
transmission means for transmitting the data signal to an immediately downstream data transmission apparatus; and
transmission stopping means (59) for causing the transmission means to stop transmitting the data signal to the immediately downstream data transmission apparatus if the signal determination means (48, 60) determines that there is no incoming data signal.

3. The data transmission apparatus according to claim 1, further comprising signal extraction means (50) for extracting the electrical signal of the predetermined frequency,
wherein the signal determination means (40) includes:
threshold level storage means (54) for storing a threshold signal level; and
level comparison means (56) for determining a presence or absence of the data signal by comparing the level of the electrical signal extracted by the signal extraction means (50) against the threshold signal level stored in the threshold level storage means (54).

4. The data transmission apparatus according to claim 1, further comprising:
read means (36) for reading out, as a digital data value, a signal obtained by modulating the electrical signal of the predetermined frequency; and
difference value detection means (38) for detecting a difference value by subtracting, from the digital data value currently read out by the read means (36), a digital data value immediately previously read out by the read means (36),
wherein the signal determination means (60) determines presence or absence of the data signal based on the difference value detected by the difference value detection means (38).

5. The data transmission apparatus according to claim 4, wherein the signal determination means (60) includes:
difference value storage means (62) for storing a threshold difference value; and
difference comparison means (64) for determining a presence or absence of the data signal by comparing the difference value detected by the difference value detection means (38) against the threshold difference value stored in the difference value storage means (62).

6. The data transmission apparatus according to claim 1, further comprising reset means (13) for suspending transmission and reception of the data signal for a predetermined period if the signal determination means (48, 60) determines that there is no incoming data signal.

7. The data transmission apparatus according to claim 6, wherein, when resetting a setting made in the data transmission apparatus during a boot of the ring network, the reset means (13) suspends transmission and reception of the data signal for a period which is equal to or greater than a result of the multiplication: [a number obtained by subtracting one from the number of data transmission apparatuses in the ring network] × [an amount of time required before the transmission stopping means (59) is able to stop transmission of the data signal after the inputting of the data signal to the signal determination means (48, 60) stops].

8. The data transmission apparatus according to claim 6, further comprising lock signal outputting means (11) for transmitting a lock signal for establishing clock synchronization to an immediately downstream data transmission apparatus if suspension of transmission and reception of the data signal by the reset means (13) is released.

9. The data transmission apparatus according to claim 8, further comprising training signal outputtingmeans (11) for, after the lock signal is transmitted by the lock signal outputting means (11), transmitting a training signal for adjusting evaluation levels used for the data value evaluation by each data transmission apparatus in the ring network.

10. The data transmission apparatus according to claim 1, wherein the predetermined protocol is MOST (Media Oriented Systems Transport).

11. A data transmission system for transmitting a data signal in accordance with a predetermined protocol in one direction within a ring network comprising a plurality of data transmission apparatuses which are sequentially connected to one another, the data signal being obtained by modulating an electrical signal of a predetermined frequency,
wherein each of the plurality of data transmission apparatuses includes:
signal determination means (48, 60) for determining a presence or absence of a data signal from an immediately upstream data transmission apparatus in the ring network based on an amplitude of the data signal;
data evaluation means (40) for evaluating a data value of the data signal from the immediately upstream data transmission apparatus;
processing means (13) for performing a process for a result of evaluation by the data evaluation means (40) in accordance with the predetermined protocol; and
evaluation stopping means (58) for causing the data evaluation means (40) to stop outputting a result of evaluation to the processing means (13) if the signal determination means (48, 60) determines that there is no incoming data signal.
